(19) Europäisches Patentamt
European Patent Office
Office européen des brevets

(11) **EP 4 383 368 A1**

(12) **EUROPEAN PATENT APPLICATION**

(43) Date of publication:
**12.06.2024 Bulletin 2024/24**

(21) Application number: **23212726.6**

(22) Date of filing: **28.11.2023**

(51) International Patent Classification (IPC):
**H01M 4/134** (2010.01)   **H01M 4/36** (2006.01)
**H01M 4/38** (2006.01)   **H01M 4/587** (2010.01)
**H01M 4/62** (2006.01)

(52) Cooperative Patent Classification (CPC):
**H01M 4/386; H01M 4/134; H01M 4/366;
H01M 4/587; H01M 4/625;** H01M 10/0525;
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 KR 20220162834**

(71) Applicant: **Hansol Chemical Co., Ltd
Seoul 06169 (KR)**

(72) Inventors:
• **KANG, SUNGHWAN
55321 Wanju-gun (KR)**

• **SHIM, HYEONWOO
55321 Wanju-gun (KR)**
• **PARK, BYUNGHOON
55321 Wanju-gun (KR)**
• **GONG, MINKYUNG
55321 Wanju-gun (KR)**
• **KWON, SEMAN
55321 Wanju-gun (KR)**

(74) Representative: **Script IP Limited
Suite J, Anchor House
School Close
Chandlers Ford
Eastleigh, Hampshire SO53 4DY (GB)**

(54) **ANODE ACTIVE MATERIAL FOR LITHIUM SECONDARY BATTERY, METHOD OF PREPARING THE SAME, AND LITHIUM SECONDARY BATTERY INCLUDING THE SAME**

(57)   An anode active material for a lithium secondary battery includes a core portion, and a shell portion formed outside the core portion. The core portion may be a porous spherical particle including metal particles, the shell portion may include carbon, and a distance between metal particles in the core portion may satisfy the following formula:

$$0.6 \times (\text{average value of major diameters of metal particles} + \text{average value of minor diameters of metal particles}) \leq (\text{distance between metal particles}) \leq 0.85 \times (\text{average value of major diameters of metal particles} + \text{average value of minor diameters of metal particles}).$$

FIG. 1

**Description**

CROSS-REFERENCE TO RELATED APPLICATION

This application claims the benefit of Korean Patent Application No. 10-2022-0162834 filed on November 29, 2022, in the Korean Intellectual Property Office, the entire disclosure of which is incorporated herein by reference for all purposes.

BACKGROUND

1. Field of the Invention

One or more embodiments relate to an anode active material for a lithium secondary battery, a method of preparing the anode active material, and a lithium secondary battery including the anode active material.

2. Description of the Related Art

Batteries are devices that convert chemical energy into electrical energy. Secondary batteries refer to batteries that are rechargeable to be used after the batteries are discharged, unlike primary batteries. Among such secondary batteries, lithium secondary batteries produce electricity through a chemical reaction in which lithium ions move from an anode to a cathode during discharge.

Recently, a demand for lithium secondary batteries in the market has noticeably increased. Accordingly, as applications of lithium secondary batteries become more diverse, higher performance demands are raised. Thus, there is a demand for the higher capacity and longer lifespan of lithium secondary batteries. Currently, graphite is widely used as an anode active material. However, since the graphite exhibits a theoretical capacity of about 372 milliampere-hours per gram (mAh/g), performance is insufficient in terms of high capacity required in the market.

Silicon, which theoretically has a capacity ten times greater than that of graphite, is attracting attention as an anode material for lithium secondary batteries. However, due to a great volumetric expansion of silicon occurring during a lithiation process in a lithium secondary battery, a coating layer used to control direct contact between silicon and an electrolyte is destroyed, lifespan characteristics are reduced, or an expansion rate of an electrode plate increases, which results in a reduction in a cell safety.

In particular, silicon comes into contact with an electrolyte and forms a solid electrolyte interphase (SEI) layer at an interface, and the SEI layer is generated using the electrolyte as a raw material, and accordingly, the electrolyte is consumed. Accordingly, a contact interface between the silicon and the electrolyte expands due to the expansion of the silicon, which causes the electrolyte to continue to be consumed, thereby increasing a cell resistance, which is a major cause of a reduction in lifespan characteristics and output characteristics of a battery.

To compensate for the above issues, efforts have been made to obtain nano-sized silicon particles and secure space for silicon expansion in related industries. However, several issues still occur in commercialization.

SUMMARY

Embodiments provide an anode active material for a lithium secondary battery that has good lifespan characteristics and that is safe when the size of nano-sized silicon particles and an appropriate distance between adjacent silicon particles are controlled, provide a method of preparing the anode active material, and provide a lithium secondary battery including the anode active material.

However, goals to be achieved are not limited to those described above, and other goals not mentioned above can be clearly understood by one of ordinary skill in the art from the following description.

According to an aspect, there is provided an anode active material for a lithium secondary battery, the anode active material including a core portion, and a shell portion formed outside the core portion. The core portion may be a porous spherical particle including metal particles, the shell portion may include carbon, and a distance between metal particles in the core portion may satisfy Formula 1 shown below:

[Formula 1]

$$0.6 \times (\text{average value of major diameters of metal particles} + \text{average value of minor diameters of metal particles}) \leq (\text{distance between metal particles}) \leq 0.85 \times (\text{average value of major diameters of metal particles} + \text{average value of minor diameters of metal particles})$$

In Formula 1, the distance between the metal particles is a distance between central points of the metal particles.

According to another aspect, there is provided a method of preparing the anode active material, the method including step S 1 of mixing metal particles and an amorphous carbon precursor in a solvent and pulverizing a mixture of the metal particles and the amorphous carbon precursor in the solvent, step S2 of preparing metal precursor powder by spray-drying the pulverized solution, step S3 of preparing composite powder by mixing the metal precursor powder, the amorphous carbon precursor, and crystalline carbon and by performing complexation, and step S4 of performing heat treatment on the composite powder and sieving the composite powder.

According to another aspect, there is provided a lithium secondary battery including the anode active material.

Additional aspects of embodiments will be set forth in part in the description which follows and, in part, will be apparent from the description, or may be learned by practice of the disclosure.

According to embodiments, an anode active material for a lithium secondary battery may have an improved lifespan retention rate and improved volumetric expansion characteristics of an electrode plate by securing an appropriate distance between silicon particles.

It should be understood that the effects of the present disclosure are not limited to the above-described effects, but are construed as including all effects that can be inferred from the configurations and features described in the following description or claims of the present disclosure.

BRIEF DESCRIPTION OF THE DRAWINGS

FIG. 1 is a cross-sectional view of an anode active material for a lithium secondary battery with a core-shell structure according to an embodiment; and
FIG. 2 is an enlarged view of a core portion of an anode active material for a lithium secondary battery according to an embodiment.

DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, the terms first, second, A, B, (a), and (b) may be used to describe components of the embodiments.

These terms are used only for the purpose of discriminating one component from another component, and the nature, the sequences, or the orders of the components are not limited by the terms.

A component, which has the same common function as a component included in any one embodiment, will be described by using the same name in other embodiments. Unless disclosed to the contrary, the description of any one embodiment may be applied to other embodiments, and the specific description of the repeated configuration will be omitted.

In the present specification, when one part "includes" one component, this indicates that the part may further include another component instead of excluding another component.

According to an embodiment, an anode active material for a lithium secondary battery may be provided. The anode active material may include a core portion, and a shell portion formed outside the core portion.

The core portion may be a porous spherical particle including metal particles.

The shell portion may include carbon.

A distance between metal particles in the core portion may satisfy Formula 1 shown below.

[Formula 1]

$$0.6 \times \text{(average value of major diameters of metal particles} + \text{average value of minor diameters of metal particles)} \leq \text{(distance between metal particles)} \leq 0.85 \times \text{(average value of major diameters of metal particles} + \text{average value of minor diameters of metal particles)}$$

In Formula 1, the distance between the metal particles may include a distance between central points of the metal particles.

The metal particles included in the core portion of the anode active material may include at least one of Si, Al, Zn, Ca, Mg, Fe, Mn, Co, Ni, Sn, Ge, oxides thereof, carbides thereof, and alloys thereof, and desirably at least one of Si, Ge, Sn, and oxides thereof. In addition, more desirably, to enhance the energy density, the maximum capacity, and the like of the anode active material, silicon (Si) particles may be used as the metal particles.

To suppress a volume change of silicon caused by charging and discharging, the silicon particles may be desirably nanoparticles having a size of 1000 nanometers (nm) or less, more desirably 50 nm to 150 nm based on Dv50 (laser diffraction method), and even more desirably 80 nm to 120 nm.

When an average particle size (Dv50) of the metal particles exceeds 1000 nm, an effect of suppressing the volume change may decrease, which may result in a reduction in a lifespan of a battery. When the average particle size is less than 50 nm, the manufacturing cost may increase, and a capacity and efficiency of the battery may decrease.

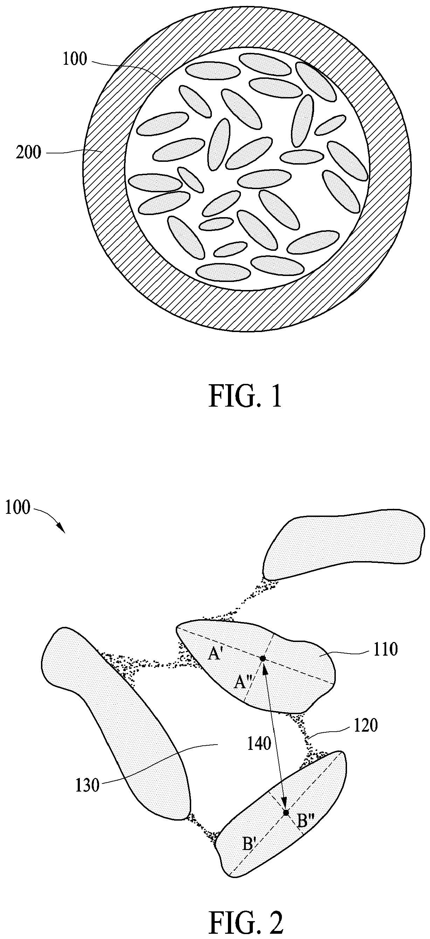

In addition, silicon nanoparticles may have a scaly shape. When the metal particles have the same shape as described above, the metal particles may have a major diameter and a minor diameter, as shown in FIG. 1.

The metal particles included in the core portion of the anode active material may be dispersed in the core portion instead of being in direct contact with each other, and the dispersed metal particles may be physically connected to each other via a carbon link included in the core portion. Due to the carbon link, a contact resistance between particles may decrease when electrons move, and as a result, an electrical conductivity may be enhanced and good output characteristics or charging rate may be obtained.

In addition, as bonding between silicon particles is strengthened, a stable electrochemical reaction may be enabled and an electrical conduction path of metal particles may be maintained even during continuous charging and discharging of a lithium secondary battery. As a result, lifespan characteristics (long lifespan) of the lithium secondary battery may be improved.

The carbon link included in the core portion may desirably include amorphous carbon.

The amorphous carbon may be derived from, for example, at least one of sucrose, a phenol resin, a naphthalene resin, a polyvinyl alcohol resin, a furfuryl alcohol resin, a furan resin, a cellulose resin, a styrene resin, a polyimide resin, an epoxy resin, a vinyl chloride resin, coal-based pitch, petroleum-based pitch, polyvinyl chloride, stearic acid, mesophase pitch, tar, a block copolymer, a polyol, and low-molecular weight heavy oil, however, embodiments are not limited thereto. More specifically, the amorphous carbon may correspond to coal-based pitch, petroleum-based pitch, an acrylic resin, and the like.

The metal particles included in the core portion of the anode active material may be dispersed in the core portion in a state of being connected to each other via the carbon link, for example, amorphous carbon, instead of being in direct contact with each other, as described above. Since the core portion has a predetermined porosity, the metal particles in the core portion may be arranged at regular intervals.

The present inventors have found that when a specific relationship is satisfied by focusing on the size of metal particles, such as silicon, and the like, and a distance between the metal particles, a low expansion rate of an electrode plate and an excellent lifespan retention rate are shown in manufacturing of an anode plate and a secondary battery using an anode active material including the metal particles. The specific relationship may satisfy Formula 1 shown below.

[Formula 1]

$$0.6 \times (\text{average value of major diameters of metal particles} + \text{average value of minor diameters of metal particles}) \leq (\text{distance between metal particles}) \leq 0.85 \times (\text{average value of major diameters of metal particles} + \text{average value of minor diameters of metal particles})$$

In Formula 1, the distance between the metal particles may include a distance between central points of the metal particles. The central points of the metal particles may include, for example, an intersection of a major diameter and a minor diameter of a metal particle having a scaly shape.

When the distance between the metal particles of the anode active material is in a range of 0.6 times to 0.85 times a sum of an average value of the major diameters of the metal particles and an average value of the minor diameters of the metal particles, damage to a silicon-coated layer due to expansion characteristics of silicon metal particles caused by charging and discharging may be limited, and an irreversible reaction caused by direct contact between an electrolyte and silicon metal particles may be suppressed, which may result in high lifespan characteristics. In addition, by securing an expansion space in advance, the expansion rate of the electrode plate may also be reduced, and thus, safety may be improved.

This may be clearly supported by a comparison of Examples 1 to 4 and Comparative Examples 1 to 4 that will be described below.

The shell portion of the anode active material may include carbon, and the carbon may include amorphous carbon and/or crystalline carbon. The shell portion may further include the metal particles included in the core portion.

Examples of the amorphous carbon may be substantially the same as examples of the amorphous carbon included in the carbon link described above. The crystalline carbon may include, for example, graphite carbon. In addition, the graphite carbon may be natural graphite that is naturally produced and mined, and artificial graphite (e.g., synthetic or pyrolytic graphite) prepared by performing heat treatment on coal-based pitch, petroleum-based pitch, and the like.

According to an embodiment, a method of preparing an anode active material for a lithium secondary battery may be provided. The method may include step S 1 of mixing metal particles and an amorphous carbon precursor in a solvent and pulverizing a mixture of the metal particles and the amorphous carbon precursor in the solvent, step S2 of preparing metal precursor powder by spray-drying the pulverized solution, step S3 of preparing composite powder by mixing the metal precursor powder, the amorphous carbon precursor, and crystalline carbon and by performing complexation, and step S4 of performing heat treatment on the composite powder and sieving the composite powder.

The metal particles and the amorphous carbon precursor in step S 1 may be substantially the same as the metal particles and the amorphous carbon described above. The metal particles may include, for example, scaly silicon nanoparticles. In addition, the solvent may include at least one of methanol, ethanol, propanol, and butanol, and may desirably be isopropyl alcohol (IPA) among them.

For example, in step S 1, a weight ratio of the metal particles : the solvent may be in a range of 1 : 8 to 1 : 12, and a weight ratio of the metal particles : the amorphous carbon precursor may be in a range of 10 : 3 to 10 : 12. More specifically, a mixing ratio of the metal particles : the amorphous carbon precursor : the solvent may be in a range of about 10 : 100 : 4 to about 10 : 100 : 9.

By mixing the metal particles, the amorphous carbon precursor, and the solvent at the above mixing ratio, a distance between metal particles included in a core portion of the anode active material formed through subsequent steps S2 to S4 may satisfy Formula 1 above. As a result, good lifespan characteristics and expansion characteristics may be exhibited.

For example, in step S2, the spray-drying may be performed at a temperature of 40°C to 150°C. In step S3, the metal precursor powder, the amorphous carbon precursor, and the crystalline carbon may be put into a complexer (coating equipment) manufactured by Hansol Chemical, to prepare the composite powder.

In addition, the heat treatment in step S4 may be performed at a temperature of 800°C to 1200°C for a period of about 10 minutes to 10 hours, however, embodiments are not limited thereto.

According to an embodiment, a lithium secondary battery including the anode active material described above may be provided.

According to an embodiment, the lithium secondary battery may include an anode including the anode active material, a cathode, and an electrolyte. The anode may further include a commonly used anode active material as an anode active material of a lithium battery in the art to which the present disclosure pertains, in addition to the anode active material described above. Materials of the commonly used anode active material may include, for example, at least one of a lithium metal, a metal alloyable with lithium, a transition metal oxide, a non-transition metal oxide, or a carbon-based material.

In addition, the cathode may include a cathode active material. The cathode active material may correspond to a lithium-containing metal oxide, and any one commonly used in the art may be applicable to the lithium secondary battery.

The electrolyte may include a non-aqueous electrolyte containing a lithium salt, and specifically, a non-aqueous electrolyte, a solid electrolyte, an inorganic solid electrolyte, and the like may be used.

In addition, the electrolyte may function to block physical contact between the anode and the cathode, and may include micropores through which lithium ions pass. The electrolyte may be included in a lithium secondary battery along with a separator, which is a medium that allows lithium ions to move. Examples of the separator may include glass fiber, polyester, Teflon, polyethylene, polypropylene, polytetrafluoroethylene (PTFE), and the like.

Hereinafter, a configuration of the present disclosure and effects thereof will be described in more detail through examples and comparative examples. However, the examples are merely intended for the purpose of describing the disclosure in more detail, and thus, the scope of the disclosure is not limited to the examples.

1) Experimental Example 1: Preparation of Anode Active Material for Lithium Secondary Battery

Comparative Example 1

An anode active material for a lithium secondary battery was prepared by the following method:
A solution was prepared by pulverizing a mixture including silicon, isopropyl alcohol, and stearic acid at a weight ratio of 10 : 100 : 2 using a bead mill to have a median particle size Dv50 of 100 nm. The solution was spray-dried at 60°C based on a discharge temperature, to prepare silicon precursor powder with a median particle size of 5 micrometers ($\mu$m). Subsequently, the silicon precursor powder, graphite (with a purity of 99.9% or greater and a particle size of 200 mesh or greater), and petroleum-based pitch were stirred for four hours at a weight ratio of 1 : 0.6 : 0.3, and then put into coating equipment manufactured by Hansol Chemical, to prepare composite powder. Heat treatment was performed on the composite powder in a nitrogen atmosphere furnace at 950°C for seven hours, and the composite powder was sieved using a 400 mesh sieve. Accordingly, an anode active material for a lithium secondary battery with an average distance of 48 nm between central points of adjacent silicon particles was prepared.

Comparative Example 2

An anode active material for a lithium secondary battery with an average distance of 92 nm between central points of adjacent silicon particles was prepared in the same manner as in Comparative Example 1, except that a mixture including silicon, isopropyl alcohol, and stearic acid at a weight ratio of 10 : 100 : 13 was used.

Comparative Example 3

An anode active material for a lithium secondary battery with an average distance of 57 nm between central points of adjacent silicon particles was prepared in the same manner as in Comparative Example 1, except that a mixture including silicon, isopropyl alcohol, and stearic acid at a weight ratio of 10 : 100 : 2 was pulverized using a bead mill to have a median particle size Dv50 of 115 nm.

Comparative Example 4

An anode active material for a lithium secondary battery with an average distance of 97 nm between central points of adjacent silicon particles was prepared in the same manner as in Comparative Example 3, except that a mixture including silicon, isopropyl alcohol, and stearic acid at a weight ratio of 10 : 100 : 13 was used.

Example 1

An anode active material for a lithium secondary battery with an average distance of 64 nm between central points of adjacent silicon particles was prepared in the same manner as in Comparative Example 1, except that a mixture including silicon, isopropyl alcohol, and stearic acid at a weight ratio of 10 : 100 : 5 was used.

Example 2

An anode active material for a lithium secondary battery with an average distance of 78 nm between central points of adjacent silicon particles was prepared in the same manner as in Comparative Example 1, except that a mixture including silicon, isopropyl alcohol, and stearic acid at a weight ratio of 10 : 100 : 8 was used.

Example 3

An anode active material for a lithium secondary battery with an average distance of 89 nm between central points of adjacent silicon particles was prepared in the same manner as in Comparative Example 3, except that a mixture including silicon, isopropyl alcohol, and stearic acid at a weight ratio of 10 : 100 : 5 was used.

Example 4

An anode active material for a lithium secondary battery with an average distance of 97 nm between central points of adjacent silicon particles was prepared in the same manner as in Comparative Example 3, except that a mixture including silicon, isopropyl alcohol, and stearic acid at a weight ratio of 10 : 100 : 13 was used.

2) Experimental Example 2: Manufacture of Battery

Manufacture of Coin Full Cell

To evaluate a capacity retention rate and an expansion rate of the anode active material prepared in Experimental Example 1 above, a CR2032 battery was used.

Anode active material slurry was prepared by mixing the anode active material prepared in Experimental Example 1, a conductive material (Super P), and a binder (SBR-CMC) at a weight ratio of 93 : 2 : 5 in a distilled water solvent. Subsequently, a copper foil current collector having a thickness of 11 $\mu$m was coated with the prepared anode active material slurry. The completely coated electrode plate was dried at 120°C for 30 minutes, followed by pressing, to prepare an anode having a density of 1.6 grams per cubic centimeter (g/cc).

An aluminum foil current collector was coated with cathode active material slurry prepared by mixing an NCM active material, a conductive material (acetylene black), and a binder (PVdF) at a weight ratio of 96 : 2 : 2 in an N-methylpyrrolidone solvent, and dried, to prepare a cathode.

A capacity ratio (N/P ratio) of the prepared anode with respect to the prepared cathode was set to "1.1" and an evaluation was performed using an electrolyte of 1M LiPF6 in EC : DEC (3 : 7) with 7% FEC.

3) Experimental Example 3: Analysis and Evaluation

Lifespan Characteristics

A cell manufactured by a coin full cell method was evaluated "100" times at 1 C (CC/CV charging up to 4.2 V and CC discharging down to 2.75 V) after two formation cycles at 0.1 C (CC/CV charging up to 4.2 V and CC discharging down to 2.75 V), and a first discharge capacity at 1 C and a 100th discharge capacity at 1 C were calculated as a fraction.

$$Capacity\ retention\ rate\ (\%) = \frac{100th\ discharge\ capacity,\ 1\ C}{First\ discharge\ capacity,\ 1\ C} \times 100\%$$

Expansion Rate of Electrode Plate

After "100" cycles of charging and discharging of a coin full cell were performed at 1 C, the cell was decomposed to measure the thickness of the anode. The expansion rate was measured according to the following equation, through a comparison to a thickness of an anode plate before charging and discharging were performed.

$$Expansion\ rate =$$

$$\frac{Thickness\ of\ anode\ plate\ after\ 100\ cycles\ of\ charging\ and\ discharging - Thickness\ of\ current\ collector}{Thickness\ of\ anode\ plate\ before\ charging\ and\ discharging - Thickness\ of\ current\ collector} \times$$

$$100\%$$

Particle Size

The primary particle size and secondary particle size of particles were measured using Malvern mastersizer 3000 from MALVERN.

Measurement of Cross Section Information

An average value of major diameters of particles, an average value of minor diameters of the particles, and a distance between central points of the particles were observed by scanning electron microscopy (SEM) after the anode active material was cut using a focused ion beam (FIB).
The results of Experimental Examples 1 to 3 are shown in Table 1 below.

[Table 1]

|  | Comparative Example 1 | Comparative Example 2 | Comparative Example 3 | Comparative Example 4 | Example 1 | Example 2 | Example 3 | Example 4 |
|---|---|---|---|---|---|---|---|---|
| Distance between adjacent particles (nm) | 48 | 92 | 57 | 97 | 64 | 78 | 73 | 89 |
| Average value A' of major diameters (nm) | 76 | 74 | 82 | 79 | 76 | 76 | 80 | 80 |
| Average value A" of minor diameters (nm) | 28 | 28 | 34 | 34 | 29 | 29 | 34 | 33 |
| (A'+A") × 0.6 (nm) | 62.4 | 61.2 | 69.6 | 67.8 | 63 | 63 | 68.4 | 66.6 |
| (A'+A") × 0.85 (nm) | 88.4 | 86.7 | 98.6 | 96.05 | 89.25 | 89.25 | 96.9 | 96.05 |
| Expansion rate (%) | 36.7 | 33.6 | 37.8 | 37.2 | 31 | 30.1 | 33.4 | 32.5 |
| Lifespan retention rate (%) | 84.1 | 81 | 83.4 | 80.8 | 87.3 | 86.4 | 86.9 | 87.8 |

Based on Experimental Examples 1 to 3, it can be seen that when the anode active material for the lithium secondary battery according to an embodiment has a relationship among a specific distance between adjacent particles, an average value of major diameters of the particles and an average value of minor diameters of the particles as described above, a lithium secondary battery may have excellent expansion characteristics (i.e., a low expansion rate) and an excellent lifespan retention rate (i.e., a high lifespan retention rate).

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

EXPLANATION OF REFERENCE NUMERALS

100: Core portion
110: Scaly silicon nanoparticles
120: Carbon link
130: Pore
140: Distance between silicon particles
200: Shell portion

**Claims**

1. An anode active material for a lithium secondary battery, the anode active material comprising:

   a core portion; and
   a shell portion formed outside the core portion,
   wherein the core portion is a porous spherical particle comprising metal particles,
   wherein the shell portion comprises carbon, and
   wherein a distance between metal particles in the core portion satisfies Formula 1:

   [Formula 1]

   $$0.6 \times (\text{average value of major diameters of metal particles} + \text{average value of minor diameters of metal particles}) \leq (\text{distance between metal particles}) \leq 0.85 \times (\text{average value of major diameters of metal particles} + \text{average value of minor diameters of metal particles})$$

   wherein the distance between the metal particles is a distance between central points of the metal particles.

2. The anode active material of claim 1, wherein the metal particles in the core portion comprise at least one selected from a group consisting of Si, Ge, Sn, and oxides thereof.

3. The anode active material of claim 1, wherein the metal particles have a diameter (Dv50) of 50 nanometers (nm) to 150 nm.

4. The anode active material of claim 1, wherein the metal particles are scaly silicon nanoparticles.

5. The anode active material of claim 1, wherein the metal particles in the core portion are physically connected to each other via a carbon link.

6. The anode active material of claim 5, wherein the carbon link comprises amorphous carbon.

7. The anode active material of claim 6, wherein the amorphous carbon is derived from at least one selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, a vinyl chloride resin, coal-based pitch, petroleum-based pitch, polyvinyl chloride, stearic acid, mesophase pitch, tar, a block copolymer, a polyol, and low-molecular weight heavy oil.

8. The anode active material of claim 1, wherein the carbon in the shell portion comprises at least one selected from a group consisting of crystalline carbon and amorphous carbon.

9. The anode active material of claim 1, wherein the shell portion further comprises scaly silicon nanoparticles.

10. A method of preparing an anode active material for a lithium secondary battery, the method comprising:

step S 1 of mixing metal particles and an amorphous carbon precursor in a solvent and pulverizing a mixture of the metal particles and the amorphous carbon precursor in the solvent;
step S2 of preparing metal precursor powder by spray-drying the pulverized solution;
step S3 of preparing composite powder by mixing the metal precursor powder, the amorphous carbon precursor, and crystalline carbon and by performing complexation; and
step S4 of performing heat treatment on the composite powder and sieving the composite powder.

11. The method of claim 10, wherein

the metal particles are scaly silicon nanoparticles,
the solvent comprises at least one selected from a group consisting of methanol, ethanol, propanol, and butanol, and
the amorphous carbon precursor is derived from at least one selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, a vinyl chloride resin, coal-based pitch, petroleum-based pitch, polyvinyl chloride, stearic acid, mesophase pitch, tar, a block copolymer, a polyol, and low-molecular weight heavy oil.

12. The method of claim 10, wherein a weight ratio of the metal particles : the solvent in step S1 is in a range of 1 : 8 to 1 : 12.

13. The method of claim 12, wherein a weight ratio of the metal particles : the amorphous carbon precursor in step S1 is in a range of 10 : 3 to 10 : 12.

14. The method of claim 10, wherein the spray-drying in step S2 is performed at a temperature of 40°C to 150°C.

15. The method of claim 10, wherein the heat treatment in step S4 is performed at a temperature of 800°C to 1200°C for a period of 10 minutes to 10 hours.

FIG. 1

FIG. 2

Europäisches
Patentamt

European
Patent Office

Office européen
des brevets

# EUROPEAN SEARCH REPORT

Application Number

**EP 23 21 2726**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 964 937 B2 (SAMSUNG ELECTRONICS CO LTD [KR]; SAMSUNG SDI CO LTD [KR]) 30 March 2021 (2021-03-30) * claims 1,25 * * examples 1,2 * | 1-15 | INV. H01M4/134 H01M4/36 H01M4/38 H01M4/587 H01M4/62 |
| X | CN 115 188 938 A (HIGHPOWER TECH HUIZHOU CO LTD) 14 October 2022 (2022-10-14) * claim 1; figure 1 * | 1,2 | |
| A | US 2016/164081 A1 (CUI QING-WEI [CN] ET AL) 9 June 2016 (2016-06-09) * paragraphs [0050] – [0057]; claim 1 * | 1-15 | |

TECHNICAL FIELDS
SEARCHED      (IPC)

**H01M**

The present search report has been drawn up for all claims

| Place of search | Date of completion of the search | Examiner |
|---|---|---|
| Munich | 30 April 2024 | González Junquera, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 2726

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2024

| Patent document cited in search report | | Publication date | Patent family member(s) | | Publication date |
|---|---|---|---|---|---|
| US 10964937 | B2 | 30-03-2021 | CN | 109560262 A | 02-04-2019 |
| | | | KR | 20190035387 A | 03-04-2019 |
| | | | US | 2019097220 A1 | 28-03-2019 |
| CN 115188938 | A | 14-10-2022 | NONE | | |
| US 2016164081 | A1 | 09-06-2016 | CN | 103474666 A | 25-12-2013 |
| | | | US | 2016164081 A1 | 09-06-2016 |
| | | | WO | 2015010524 A1 | 29-01-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220162834